# FASCICULE DE BREVET EUROPEEN

(11) **EP 3 679 328 B1**
(45) Date de publication et mention de la délivrance du brevet: **07.07.2021**
(21) Numéro de dépôt: 17780794.8
(22) Date de dépôt: 07.09.2017
(51) Int. Cl.: F16D 65/00, G01D 5/14, F16D 55/228

(54) **ACTIONNEUR ÉLECTROMAGNÉTIQUE**
ELEKTROMAGNETISCHER AKTUATOR
ELECTROMAGNETIC ACTUATOR

(43) Date de publication de la demande: 15.07.2020
(73) Titulaire: Warner Electric Europe SAS, 49124 St-Barthélémy d'Anjou (FR)
(72) Inventeur: COUTURIER, Eric, 49240 Avrillé (FR); VOLANT, Eric, 49190 Denée (FR); BARDON, Arnaud, 49215 Tiercé (FR)
(74) Mandataire: Santarelli
(86) Numéro de dépôt international: PCT/FR2017/052384
(87) Numéro de publication internationale: WO 2019/048742

(56) Documents cités:
- WO-A1-98/38656
- DE-A1-102007 030 391
- US-A- 4 331 263

## Description

La présente invention concerne un actionneur électromagnétique pour bloquer un arbre rotatif (on parle alors de frein) ou bien pour accoupler deux arbres rotatifs (on parle alors d'embrayage). L'actionneur comprend au moins un inducteur (coquille + bobinage), une armature et un disque d'entrainement solidaire en rotation de l'arbre rotatif.

Dans le cas d'un frein, l'armature peut être sollicitée, au repos, par des moyens élastiques (par exemple des ressorts) contre le disque d'entrainement et, lorsque l'inducteur est alimenté en courant, l'armature est déplacée, par attraction électromagnétique, vers l'inducteur à l'encontre des moyens élastiques, desserrant ainsi la prise avec le disque d'entrainement. De tels actionneurs électromagnétiques de freinage sont notamment mis en œuvre dans les ascenseurs, les chariots élévateurs, et plus généralement dans tout type de dispositif nécessitant des arrêts prolongés sécurisés.

Dans le cas d'un embrayage, l'armature solidaire de l'arbre dit entrainant peut-être sollicitée par un moyen élastique, au repos, dans une position qui l'éloigne du disque d'entrainement solidaire de l'arbre rotatif dit entrainé. L'arbre rotatif entrainé est alors libre en rotation. Lorsque l'inducteur est alimenté, l'armature est déplacée, par attraction électromagnétique, vers le disque d'entrainement, l'armature et le disque étant munis soit de zones de friction soit de dentures, ce qui accouple en rotation les arbres entrainant et entrainé. De tels actionneurs électromagnétiques d'embrayage sont notamment mis en œuvre dans les systèmes de levage, de convoyage, de transport, et plus généralement dans tout type de dispositif nécessitant d'accoupler ou de désaccoupler une transmission de puissance rotative.

Il est connu dans l'art antérieur d'équiper de tels actionneurs électromagnétiques avec des modules de mesure pour mesurer le déplacement axial de l'armature afin d'obtenir une information fiable sur le fonctionnement effectif de l'actionneur. Un type de module de mesure classique intègre un capteur mécanique à contacts directs dit « contacts dorés » qui comprend des contacts électriques directs actionnés par le mouvement de l'armature. Ces contacts sont dits « dorés », car ils sont revêtus d'une fine couche d'or pour améliorer la qualité du contact électrique. Cependant, ce type de capteur souffre d'un inconvénient majeur lié à la pollution des contacts dorés. En effet, les contacts dorés sont excessivement sensibles à toutes sortes de pollutions qui peuvent se déposer sur les contacts et ensuite les détériorer, conduisant à une perte partielle ou totale de fonction.

Il a également été tenté d'utiliser des capteurs de champ magnétique, tel que les capteurs à effet Hall. Ce type de capteur est sans contact, de sorte qu'il ne souffre pas des inconvénients (pollutions) des capteurs à contact direct. Cependant, le champ magnétique produit par le bobinage de l'inducteur de l'actionneur est tellement puissant qu'il perturbe fortement la capacité de détection de ces capteurs de champ magnétique. C'est pourquoi leur mise en œuvre n'est pas privilégiée, ni répandue.

Les documents WO 98/38656 A1, DE 10 2007 030391 A1 et US 4 331 263 A sont des documents de l'art antérieur.

La présente invention est définie dans la revendication indépendante. Elle a pour but de fournir un module de mesure intégrant un capteur de champ magnétique, et notamment un capteur à effet Hall, qui s'accommode du champ magnétique puissant de l'inducteur pour détecter des grandeurs diverses liées à l'armature, mais aussi à d'autres éléments mobiles de l'actionneur, comme le disque d'entrainement ou le moyeu. En d'autres termes, la capacité de détection du capteur de l'invention doit être conservée, malgré la présence du champ magnétique hautement perturbant de l'inducteur.

Pour ce faire, la présente invention propose un actionneur électromagnétique définissant un axe de symétrie Z et une infinité de plans radiaux Pr disposés en éventail autour de l'axe de symétrie Z, l'actionneur comprenant au moins un inducteur avec une coquille recevant au moins un bobinage, une armature présentant deux face latérales parallèles opposées, un disque d'entrainement et des moyens élastiques, l'armature étant sollicitée, au repos, par les moyens élastiques contre ou en éloignement du disque d'entrainement et, lorsque le bobinage est alimenté en courant, l'armature est déplacée axialement vers l'inducteur à l'encontre des moyens élastiques en éloignement ou contre le disque d'entrainement, l'actionneur comprenant également un module de mesure comprenant un capteur de champ magnétique, tel qu'un capteur à effet Hall, disposé dans un plan radial Pr et définissant une direction de sensibilité B aux champs magnétiques, le module de mesure comprenant au moins un aimant permanent qui se déplace par rapport au capteur de champ magnétique de manière à générer un champ magnétique détectable par le capteur de champ magnétique, caractérisé en ce que la direction de sensibilité B du capteur de champ magnétique est perpendiculaire au plan radial Pr dans lequel le capteur de champ magnétique est positionné.

Ainsi, le capteur de champ magnétique n'est pas, ou que très peu ou modérément, perturbé par le champ magnétique puissant de l'inducteur. En effet, les lignes de champ de l'inducteur s'étendent principalement, ou même uniquement, dans les plans radiaux Pr, puisque le bobinage de l'inducteur est annulaire, elliptique ou rectangulaire avec comme centre l'axe de symétrie Z. En s'étendant orthogonalement au plan radial Pr dans lequel le capteur est positionné, la direction de sensibilité B assure un fonctionnement qui est presque, voire parfaitement, insensible au champ magnétique de l'inducteur.

Il est à noter que le capteur de champ magnétique peut être monté fixement par rapport à l'inducteur et dans ce cas, le ou les aimants permanents sont mobiles, ou au contraire, le ou les aimants permanents peuvent être montés fixement par rapport à l'inducteur et le capteur est alors mobile.

Avantageusement, le capteur de champ magnétique présente une configuration plate définissant un plan de capteur Pc qui est parallèle, et de préférence, confondu, avec le plan radial Pr dans lequel le capteur de champ magnétique est positionné, la direction de sensibilité B étant ainsi perpendiculaire au plan de capteur Pc.

Avantageusement, le capteur de champ magnétique est situé à proximité immédiate du bobinage, là-même où les lignes de champ magnétiques sont maximales.

Selon un mode de réalisation avantageux, deux aimants permanents sont solidarisés l'un par rapport à l'autre et alignés axialement de part et d'autre du capteur de champ magnétique, les aimants permanents sont sollicités élastiquement contre l'armature et le capteur de champ magnétique est lié rigidement à l'inducteur. En variante, le capteur de champ magnétique est sollicité élastiquement contre l'armature et les aimants permanents sont liés rigidement à l'inducteur. Selon un mode de réalisation adapté à la détection du déplacement de l'armature, deux aimants permanents peuvent être montés sur un poussoir mobile qui est sollicité élastiquement contre une face latérale de l'armature de manière à suivre les déplacements axiaux de l'armature, les deux aimants permanents étant alignés axialement, le capteur de champ magnétique étant disposé fixement entre les deux aimants permanents. Ainsi, le capteur fixe détecte le déplacement axial des deux aimants. La disposition du capteur entre les deux aimants permet d'obtenir une réponse linéaire. Il est à noter que ce module de mesure avec deux aimants entre lesquels est disposé un capteur de champ magnétique est protégeable en soi, c'est-à-dire indépendamment de l'orientation particulière du capteur par rapport au bobinage de l'inducteur. Ce module de mesure peut même être mis en œuvre sur d'autres types d'actionneurs ou de dispositifs intégrant un organe mobile.

De préférence, les aimants permanents définissent pour l'un une orientation nord/sud et pour l'autre une orientation sud/nord qui sont parallèles entre elles, ainsi qu'avec la direction de sensibilité B, de sorte que le capteur de champ magnétique peut être positionné sensiblement au niveau du point zéro du champ magnétique. Avec des moyens de réglages simples (vis par exemple), il est possible de positionner avec précision le capteur au niveau du point zéro du champ magnétique produit par les deux aimants. On obtient ainsi une courbe linéaire qui passe par l'origine du référentiel.

Avec ce capteur de déplacement d'armature, il est possible de mesurer le déplacement de l'armature, l'ampleur du déplacement de l'armature, la variation de l'ampleur du déplacement de l'armature et/ou encore la vitesse de déplacement de l'armature.
le capteur de champ magnétique peut être un capteur proportionnel, ou encore un capteur à seuil, dont la position relative entre les aimants permanents est ajustable mécaniquement.

Le disque d'entrainement est pourvu d'au moins une couronne d'aimants de polarisations alternées qui est solidaire en rotation du disque d'entrainement, de manière à pouvoir détecter un ou plusieurs des paramètres suivants :
- la position angulaire du disque d'entrainement,
- le sens de rotation du disque d'entrainement,
- la vitesse de rotation du disque d'entrainement, et
- la variation de vitesse de rotation du disque d'entrainement.

Avantageusement, la couronne d'aimants est positionnée sur la périphérie externe du disque d'entrainement (mais toute autre partie du disque peut être envisagée).

Selon un mode de réalisation avantageux, le capteur de champ magnétique est positionné à la fois au niveau de la couronne d'aimants du disque d'entrainement et de manière adjacente à une face latérale de l'armature, de manière à pouvoir détecter un ou plusieurs des paramètres suivants :
- le déplacement de l'armature,
- le sens de déplacement de l'armature,
- l'ampleur du déplacement de l'armature,
- la variation de l'ampleur du déplacement de l'armature,
- la vitesse de déplacement de l'armature,
- la position angulaire du disque d'entrainement,
- le sens de rotation du disque d'entrainement,
- la vitesse de rotation du disque d'entrainement, et
- la variation de vitesse de rotation du disque d'entrainement.

Selon un autre mode de réalisation pratique adapté à la mesure de couple ou de décalage angulaire, plusieurs capteurs de champ magnétique sont positionnés à proximité de plusieurs disques d'entrainement pourvus chacun d'au moins une couronne d'aimants de polarisations alternées qui est solidaire en rotation de chaque disque d'entrainement, les disques d'entrainement étant élastiquement liés entre eux en torsion, de manière à pouvoir détecter un ou plusieurs des paramètres suivants :
- le couple de torsion entre les deux disques d'entrainement,
- la décalage angulaire entre les deux disques d'entrainement.

Souvent, l'actionneur électromagnétique peut comprendre un carter de support monté fixement sur l'inducteur de manière à ce que le disque d'entrainement soit positionné entre l'armature et le carter de support, le module de mesure étant monté fixement sur le carter de support.

Dans le cas d'un frein par exemple, l'armature peut être pressée contre un disque d'entrainement par au moins un ressort de compression monté précontraint dans un boîtier de l'unité d'actionnement pour freiner un arbre rotatif.

Dans le cas d'un embrayage par exemple, l'armature peut être munie de dentures et pressée contre un disque à dentures par au moins un ressort de compression monté précontraint dans un boîtier de l'unité d'actionnement pour embrayer en rotation un arbre rotatif.

L'esprit de l'invention réside dans le fait d'orienter un capteur de champ magnétique de manière optimale, c'est-à-dire avec sa direction de sensibilité perpendiculaire ou orthogonale aux lignes de champ magnétique produites par l'inducteur. L'utilisation de deux aimants mobiles, avantageusement avec des polarités disposées tête-bêche, permet d'avoir une réponse linéaire centrée. La possibilité de mesurer en plus la rotation du disque de l'actionneur avec un seul et même capteur est particulièrement avantageuse.

L'invention sera maintenant décrite plus en détail en référence aux dessins joints, donnant à titre d'exemples non limitatifs, plusieurs modes de réalisation de l'invention.

Sur les figures :
La figure 1 est une vue très schématique en coupe transversale verticale à travers un frein électromagnétique, respectivement en positon desserrée (partie haute de la figure) et en position serrée (partie basse de la figure),
La figure 2 est une vue en perspective d'un actionneur électromagnétique de type « frein » équipé d'un module de mesure selon une première forme de réalisation de la présente invention,
La figure 3a est une vue en coupe transversale verticale à travers le module de mesure de la figure 2,
La figure 3b est une vue en perspective laissant apparaître les composants internes du module de mesure de la figure 3a,
La figure 4 est une vue en perspective découpée selon deux plans orthogonaux dans le but d'expliquer le fonctionnement du module de mesure des figures 2, 3a et 3b,
Les figures 5a et 5b sont des représentations schématiques expliquant le fonctionnement du module des figures 2 à 4,
La figure 6a est un graphe intégrant une représentation schématique visant à illustrer les lignes de champs produites par le module de mesure des figures 2 à 5b.
La figure 6b est un graphe montrant la linéarité de la réponse du module de mesure des figures 2 à 6a La figure 7 est une vue en perspective découpée selon deux plans orthogonaux dans le but d'illustrer un module de mesure selon un second mode de réalisation de l'invention,
La figure 8 est une vue fortement agrandie représentant un module de mesure selon un troisième mode de réalisation de l'invention,
La figure 9 est une vue similaire à la figure 1 pour un embrayage électromagnétique, et
La figure 10 est une vue similaire à la figure 7 pour un capteur de couple.

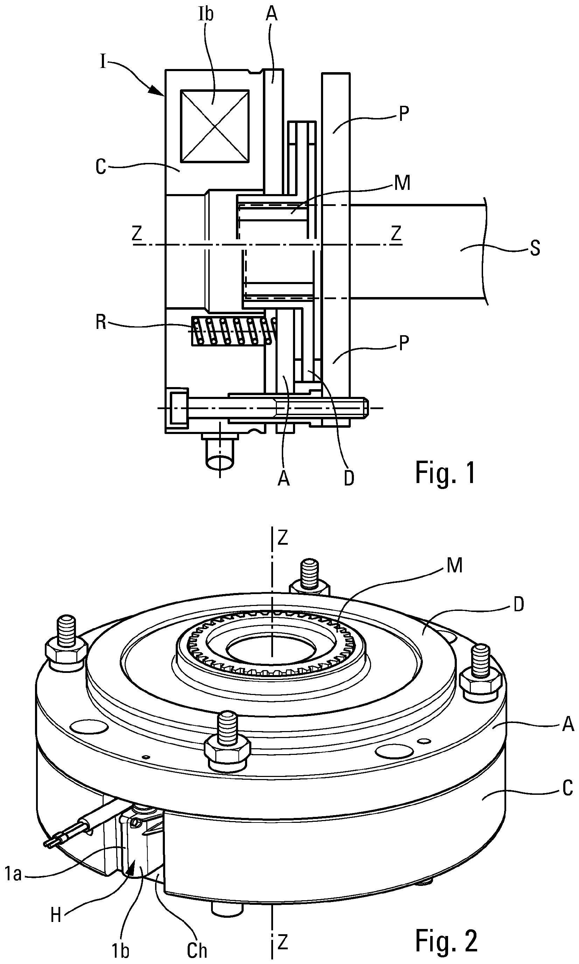

On se référera tout d'abord à la figure 1 pour expliquer de manière très générale la structure et le fonctionnement d'un actionneur électromagnétique typique utilisé pour freiner un arbre rotatif S. D'autres types d'actionneurs électromagnétiques, tels que des embrayages (à friction ou à dentures ou autres), des actionneurs de traction ou bien des actionneurs de pression sont aussi concernés par ce brevet mais ne sont pas représentés. Il comprend tout d'abord une unité d'actionnement (ou inducteur) I qui se présente généralement (mais pas exclusivement) sous la forme d'un boîtier annulaire (cylindre) ou rectangulaire (parallélépipédique) C définissant au moins un logement annulaire (ou elliptique), dans lequel est reçu au moins un bobinage (ou bobine d'inducteur) Ib de fil conducteur. Ce boîtier C, qui est parfois désigné sous le terme de « coquille », comprend également un ou plusieurs alésages borgnes, qui peuvent recevoir chacun un ou plusieurs ressorts de compression R, qui peuvent être des ressorts à boudin classiques ou des rondelles ressort ou tout autre système de poussée mécanique. Ces ressorts sont avantageusement montés en étant précontraints. L'actionneur utilisé pour freiner un arbre rotatif comprend également une armature mobile A, qui est disposée contre les ressorts R en face du bobinage Ib. Cette armature mobile A, qui est parfois désignée sous le terme de « armature mobile », est réalisée en un matériau magnétique. L'actionneur électromagnétique peut comprendre également un moyeu M qui traverse l'armature mobile A, et même une partie du boîtier C. Ce moyeu M est destiné à recevoir un arbre rotatif S entraîné par un moteur (non représenté). L'actionneur électromagnétique comprend aussi un disque d'entrainement D qui peut être disposé autour du moyeu M de manière adjacente à l'armature mobile A. Le disque d'entrainement peut aussi être disposé directement autour d'un arbre entraîné par un moteur. Le disque d'entrainement D peut présenter une surface de friction sur ses deux faces. Enfin, l'actionneur électromagnétique comprend un carter de support P qui s'étend parallèlement à l'armature mobile A, avec le disque d'entrainement D disposé entre eux. Ce carter de support P, qui est parfois désigné sous le terme de « carter de support », est monté fixement par rapport au boîtier C, par exemple à l'aide de boulons. Telle est la structure générale d'un actionneur utilisé pour freiner un arbre rotatif classique, qui peut équiper un ascenseur, un chariot élévateur, etc. Un tel actionneur électromagnétique présente une symétrie autour d'un axe central Z.

En se référant à la partie haute de la figure 1, on peut voir que l'armature mobile A est plaquée contre le boîtier C en comprimant les ressorts R, en raison de l'activation de la bobine Ib en courant. En effet, de manière connue, le bobinage Ib va créer un champ magnétique qui va attirer l'armature mobile A en matériau magnétique. L'écart entre l'armature mobile A et le carter de support P est alors maximal, et le disque d'entrainement est hors de contact à la fois de l'armature A et du carter de support P. L'actionneur utilisé pour freiner un arbre rotatif est alors inopérant et le moyeu M peut tourner librement.

En se référant à la partie basse de la figure 1, on peut voir que l'armature mobile A a été déplacée vers le carter de support P sous l'action des ressorts R. En effet, cette situation correspond à la coupure de l'activation électrique du bobinage Ib, de sorte qu'il n'y a plus de forces électromagnétiques attirant l'armature A contre le boîtier C. Les ressorts R agissent alors pleinement sur l'armature mobile A qui est poussée vers le carter de support P en prenant en sandwich entre eux le disque d'entrainement D. On peut également dire que le disque de fiction D est coincé fortement entre l'armature mobile A et le carter de support P. Le moyeu M qui est solidaire du disque d'entrainement D est alors bloqué en rotation. L'actionneur utilisé pour freiner un arbre rotatif est alors pleinement actif, bien que son activation en courant soit coupée. En d'autres termes, cet actionneur utilisé pour freiner un arbre rotatif est inactif lorsqu'alimenté et actif au repos.

La figure 1 représente un actionneur utilisé pour freiner un arbre rotatif simple, mais il existe également des actionneurs électromagnétiques doubles, mettant en œuvre deux unité d'actionnements I, deux plaques de pressions mobiles A et deux disques d'entrainement D. Le principe de fonctionnement reste toutefois le même avec une armature mobile A qui est sollicitée en déplacement axial soit par un bobinage Ib soit par des ressorts R pour serrer ou desserrer le disque d'entrainement D.

Sur la figure 2, on voit un actionneur électromagnétique présentant une structure globale comparable à celui de la figure 1, hormis que le carter de support P a été retiré, afin de laisser apparaître le disque d'entrainement D et le moyeu M. On peut remarquer que la coquille C est formée avec un évidement Ch qui est réalisé dans la périphérie externe de la coquille. Cet évidement Ch traverse l'épaisseur de la coquille C de part en part de manière à être situé en dessous de l'armature A. Un module de mesure H est disposé dans cette échancrure Ch, de manière à pouvoir détecter le déplacement axial de l'armature A le long de l'axe Z. Sur la figure 2, le module de mesure H se présente sous la forme d'un boitier 1 constitué de deux demi-coques 1a et 1b qui contiennent les composants actifs permettant de mesurer le déplacement de l'armature A. Bien que non visible sur la figure 2, le module de mesure H est disposé radialement à l'extérieur du bobinage D. Il peut par exemple être disposé entre deux ressorts R. De nombreux autres positionnements peuvent être envisagés sans pour autant sortir du cadre de la présente invention.

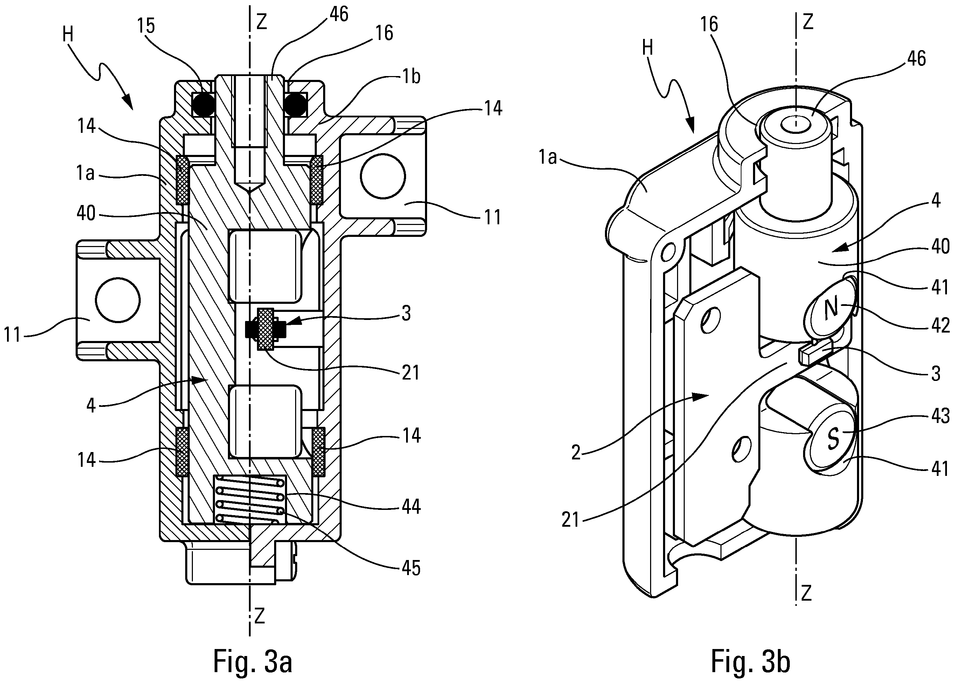

On se référera maintenant aux figures 3a et 3b pour décrire la structure et le fonctionnement du module de mesure H de la figure 2. Comme précédemment mentionné, le module de mesure H comprend deux demi-coques 1a et 1b qui contiennent une plaque de circuit imprimé 2, un capteur de champ magnétique 3 et un poussoir mobile 4. Les deux demi-coques 1a et 1b comprennent également des pattes de fixation 11 permettant de fixer le module à la coquille C. A son extrémité supérieure, les deux demi-coques 1a et 1b forment une ouverture de passage 16 qui peut être étanchéifiée par exemple mais pas exclusivement au moyen d'un joint torique 15. Les deux demi-coques 1a et 1b sont également équipées de deux anneaux de coulissement axial 14 pour le poussoir 4.

La plaque de circuit imprimé 2 est montée de manière fixe à l'intérieur des 2 demi-coques 1a et 1b. Cette plaque de circuit imprimé 2 supporte les composants nécessaires au traitement du signal issu du capteur de champ magnétique 3. La plaque 2 comprend un bras 21 sur lequel est monté le capteur de champ magnétique 3.

Ce capteur de champ magnétique 3 ou capteur magnétique est de préférence un capteur magnétique à effet Hall. Toutefois, on pourrait également utiliser un capteur magnétique à effet Faraday, un fluxgate, un fluxmètre ou une magnétorésistance ou encore une magnétoimpédance, avec des adaptations appropriées. Néanmoins, nous considérerons dans le reste de la description que le capteur de champ magnétique 3 est un capteur à effet hall, sans portée limitative.

Le poussoir 4 est une pièce qui est montée de manière mobile à l'intérieur du boitier 1 selon l'axe Z. Plus précisément, le poussoir 4 comprend un corps de poussoir 40, qui peut par exemple être réalisé par injection/moulage de matière plastique. Ce corps 40 coulisse de manière axiale à l'intérieur des anneaux de coulissement 14. Le corps 40 comprend à son extrémité inférieure un logement de ressort 44 dans lequel un ressort 45 est logé. Sur la figure 3a, le ressort 45 est représenté à l'état comprimé. On comprend alors aisément que le ressort 45 sollicite le corps 40 vers le haut, c'est-à-dire à travers l'ouverture de passage 16. D'ailleurs, le corps 40 forme à cet endroit un pointeau d'appui 46 qui coulisse de manière étanche à l'intérieur du joint torique 15. La surface supérieure ou bord supérieur du pointeau 46 fait saillie au-delà de l'ouverture de passage 16 de manière à venir en contact d'appui avec une face de l'armature A. De cette manière, le poussoir 4 est solidaire en déplacement de l'armature 4, qui elle-même se déplace soit sous l'effet du champ magnétique généré par le bobinage Ib, soit sous l'effet des ressorts R.

Le corps de poussoir 40 définit deux logements 41 qui reçoivent chacun un aimant permanent 42, 43. Ces aimants permanents 42, 43 se présentent sous la forme de petits plots cylindriques ou cubiques ou parallélépipédiques. Avantageusement, les deux aimants 42, 43 sont disposés tête-bêche quant à leur polarisation. En effet, on peut remarquer sur la figure 3b que la face visible de l'aimant 42 est son pôle nord, alors que la face visible de l'aimant 43 est son pôle sud. Les deux aimants permanents 42 et 43 sont disposés en espacement l'un de l'autre de manière à définir entre eux un entrefer dans lequel s'étend le bras 21 de la plaque de circuit imprimé 2 avec son capteur de champ magnétique 3. Ainsi, lorsque le poussoir 4 se déplace, suivant ainsi l'armature A, il se crée un déplacement relatif entre les deux aimants 42, 43 et le capteur de champ magnétique 3. C'est précisément cette variation du champ magnétique créée par le déplacement des deux aimants 42 et 43 que va détecter le capteur de champ magnétique 3.

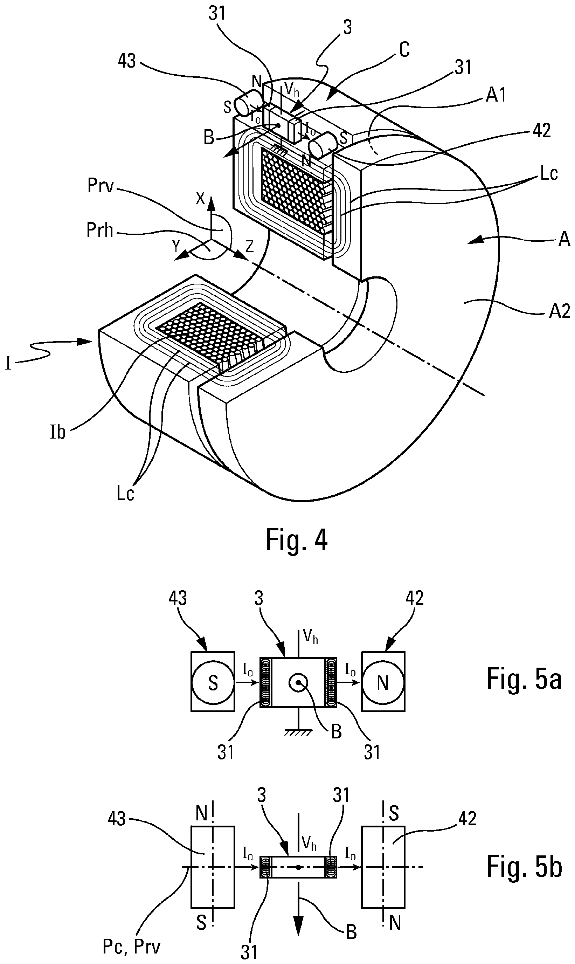

En se référant à la figure 4, on voit l'actionneur électromagnétique qui a été découpé selon deux plans radiaux orthogonaux Prv et Prh qui se coupent le long de l'axe Z. Le capteur de mesure H n'a été représenté que de manière symbolique ou schématique par son capteur de champ magnétique 3 et ses deux aimants permanents 42 et 43. Il faut comprendre que les deux aimants 42 et 43 se déplacent selon l'axe Z avec l'armature A, alors que le capteur de champ magnétique reste statique par rapport à la coquille C. Le capteur 3 et les deux aimants 42 et 43 sont disposés dans le plan radial vertical Prv correspondant aux axes X et Z. L'autre plan radial Prh correspond aux axes Y et Z : il s'étend horizontalement, et de ce fait perpendiculairement au plan radial Pr. On voit également les lignes de champ Lc qui s'étendent tout autour du bobinage Ib.

Le capteur de champ magnétique 3, qui est un capteur à effet hall, se présente sous la forme d'une petite plaquette plate et mince, avantageusement de forme parallélépipédique. Cette petite plaquette est constituée d'un conducteur ou d'un semi-conducteur. De part et d'autre selon l'axe Z, cette petite plaquette est pourvue d'une paire d'électrodes 31 auxquels on applique une tension d'excitation Io. On peut ainsi dire que la direction d'alimentation du courant d'excitation lo est parallèle à l'axe Z en étant inscrit dans le plan radial vertical Pr. Avec une telle orientation du capteur, la direction de sensibilité B du capteur s'étend perpendiculairement ou orthogonalement au plan radial Prv dans lequel sont disposés le capteur 3 et les deux aimants 42 et 43. Cette direction de sensibilité B correspond à la direction du champ magnétique qui varie en fonction du déplacement des deux aimants 42 et 43. On peut ainsi mesurer une tension de sortie ou hall Vh selon l'axe X.

Tout ceci est encore plus clair à la vue des figures 5a et 5b qui font abstraction de l'actionneur électromagnétique.

Sur la figure 5a, le plan de la feuille correspond au plan radial vertical Prv selon les axes X et Z. La direction de sensibilité B est perpendiculaire au plan de la feuille, la direction d'alimentation du courant d'excitation lo est horizontale dans le plan de la feuille, alors que la tension de hall Vh est verticale dans le plan de la feuille. Sur la figure 5b, on voit les deux aimants permanents 42 et 43 avec leur polarité inversée disposée tête bêche, la direction d'alimentation du courant d'excitation lo disposée de manière horizontale dans le plan de la feuille et la direction de sensibilité B verticale dans le plan de la feuille. Cette vue est une vue en coupe selon le plan radial de la figure 4 qui est orthogonal au plan radial vertical dans lequel se trouve le module de mesure. On peut aussi dire que la plaquette formant le capteur 3 s'étend dans un plan de capteur Pc qui est confondu avec le plan radial vertical Prv.

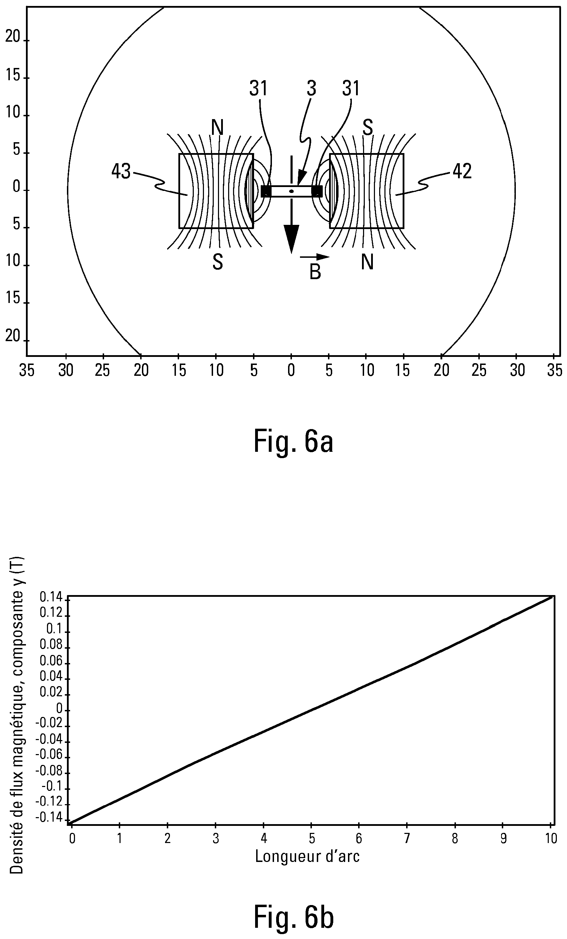

La figure 6a représente le capteur 3 disposé entre les deux aimants 42 et 43. Les lignes de champ sont représentées dans un plan de coupe situé au centre des deux aimants. L'orientation tête-bêche des polarités crée un gradient du champ suivant la direction du vecteur B. La variation de champ est linéaire pour une plage de mesure limitée entre les deux aimants.

Etant donné que le capteur 3 est disposé entre deux aimants permanents de polarités inversées, il est possible de le positionner de manière très précise au niveau du point zéro du champ magnétique, de manière à obtenir une courbe de réponse linéaire qui passe par l'origine du référentiel, comme représenté sur la figure 6b. Le capteur à effet Hall renvoie alors une tension qui est proportionnelle à la position.

Selon un mode de réalisation avantageux, l'utilisation d'un capteur à effet Hall spécifique à seuil peut renvoyer une tension constante mais qui est différente d'une plage de position à l'autre (en fonction des seuils du capteur).

Le positionnement précis du capteur 3 au niveau du point zéro du champ magnétique peut être réalisé par n'importe quelle technique de réglage, utilisant par exemple une vis de réglage agissant sur la plaque de circuit imprimé 2.

Avec un tel capteur de mesure H, on peut non seulement mesurer un déplacement de l'armature A, mais on peut également mesurer l'amplitude de ce déplacement, ainsi que la vitesse de ce déplacement. La simple détection du déplacement l'armature A permet de recueillir l'information comme quoi l'armature A se déplace, signifiant que l'actionneur fonctionne. L'amplitude du déplacement permet de déterminer s'il y a une variation d'amplitude de déplacement, correspondant à une usure de l'armature A et/ou du disque d'entrainement D. La vitesse de déplacement de l'armature A permet de donner un indice (ou de formuler un diagnostic) relatif au bruit généré par l'actionneur électromagnétique lors de son fonctionnement. Une vitesse de déplacement élevée correspond bien souvent à un bruit de l'actionneur sous la forme d'un claquement. Du fait de la réponse linéaire du capteur de champ magnétique 3, il est très facile d'analyser tous les paramètres liés au déplacement de l'armature A.

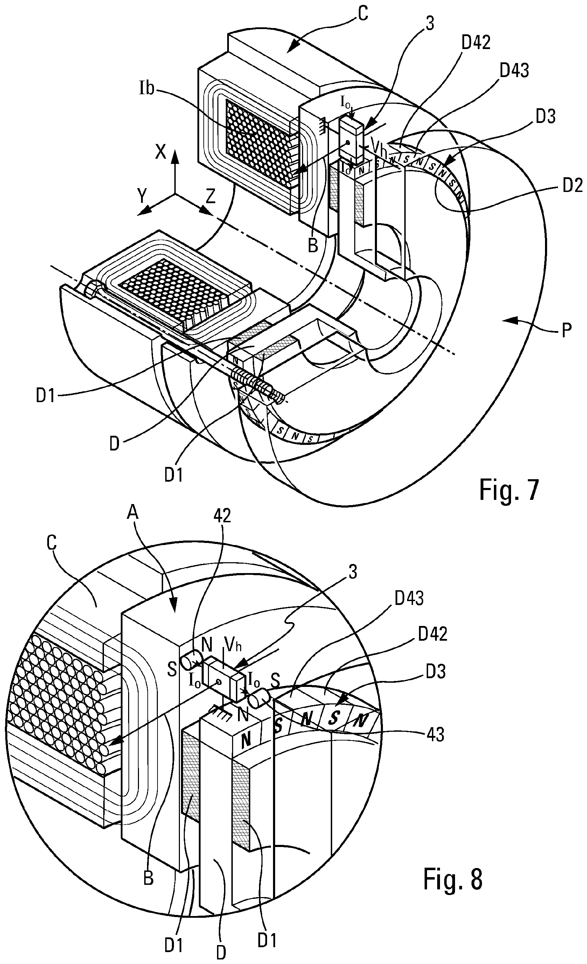

En se référant à la figure 7, on voit une représentation en coupe similaire à celle de la figure 3 pour un actionneur électromagnétique complet, c'est-à-dire avec le carter de support P. Dans ce mode de réalisation, le disque d'entrainement D, avec ses deux surfaces de friction D1, est en outre pourvu sur sa périphérie externe D2 d'une couronne d'aimants D3 constituée d'une rangée d'aimants permanents D42 et D43 disposés avec des polarités alternées, tout comme dans le premier mode de réalisation de l'invention. Cette couronne d'aimants permanents D3 génère un champ magnétique qui va être détecté par le capteur de champ magnétique 3 qui peut être en tout point conforme à celui du premier mode de réalisation, hormis son orientation par rapport au référentiel X, Y et Z. En effet, tout en restant disposée avec sa direction de sensibilité B selon l'axe Y, la plaquette constituant le capteur a été tournée de 90° dans le plan radial vertical Prv dans lequel il se trouve. Ainsi, la direction d'alimentation du courant d'excitation lo est maintenant verticale et la direction de la tension de hall Vh est horizontale selon l'axe Z.

Bien que non représenté, ce capteur 3 est disposé dans un boitier qui est fixé soit sur la coquille C soit sur le carter de support P. Ce capteur de mesure permet de mesurer la vitesse de rotation du disque d'entrainement D, ainsi que toute variation (accélération ou décélération de la vitesse de rotation du disque d'entrainement) en analysant le signal alternatif ainsi recueilli.

Il est à noter que le disque d'entraînement D peut être pourvu de deux couronnes d'aimants disposées côte à côte. A titre d'exemple, une couronne pourrait être dédiée au comptage de tour de disque et l'autre couronne pourrait être dédiée à l'orientation du disque, de manière à le stopper toujours avec la même orientation angulaire après un certain nombre de tours.

Sur la figure 8, on voit de manière très fortement agrandie l'actionneur électromagnétique de la figure 7 avec un module de mesure qui intègre à la fois ceux des premier et deuxième modes de réalisation. En effet, ce module de mesure peut présenter une structure identique ou comparable à celle des figures 3a et 3b avec une orientation identique à celle représentée sur la figure 4, mais sa disposition est celle du module de mesure de la figure 7, à savoir disposée à la périphérie de la couronne d'aimants D3. Le pointeau d'appui 46 du module peut venir en contact avec la face de l'armature A tournée vers le disque d'entrainement, de sorte que ce module de mesure peut mesurer à la fois des grandeurs liées au déplacement de l'armature A et des grandeurs liées à la rotation du disque d'entrainement D. Ce module de mesure peut être fixé soit sur la coquille C, ou de préférence sur le carter de support P. Grâce à un traitement de signal approprié, il est possible de dissocier les signaux provenant des deux aimants permanents 42 et 43 de ceux de la couronne d'aimants D3. On peut ainsi qualifier ce module de mesure de « 2 en 1 », puisqu'il intègre dans un même module les moyens de détecter à la fois un déplacement axial (celui de l'armature A) et un déplacement rotatif (celui du disque D).

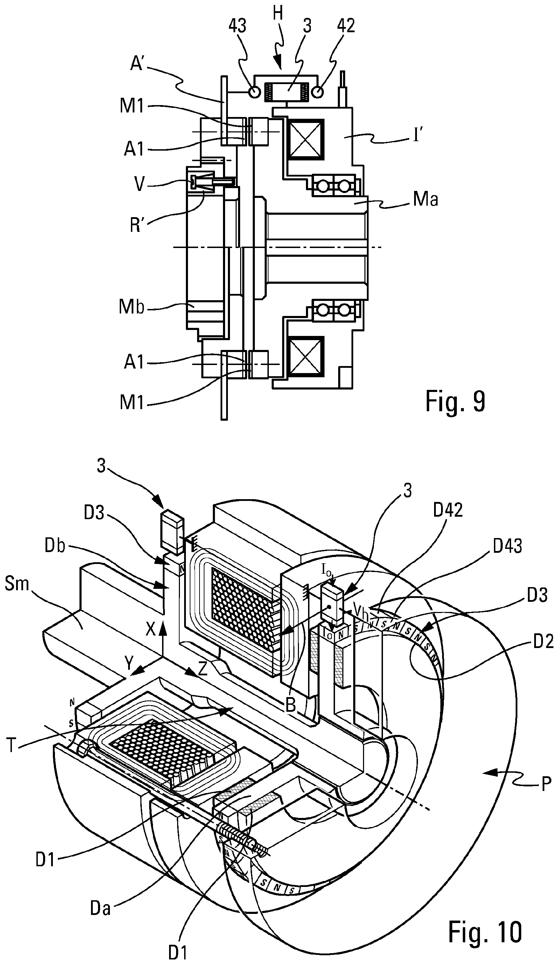

La figure 9 montre un embrayage électromagnétique dans ses deux positions, à savoir en position débrayée dans la partie haute de figure 9 et en position embrayée dans la partie basse de la figure 9. On remarque d'emblée la similitude de conception avec celle d'un frein électromagnétique. L'inducteur l'est pourvu d'un moyeu mené Ma ainsi que d'un module de mesure H, qui est identique à celui des figures 2 à 5b. Le moyeu mené Ma est réalisé avec une couronne dentée M1. D'autre part, une armature mobile A', pourvue d'une couronne dentée correspondante A1, est montée sur un moyeu menant Mb. L'armature A' est sollicitée élastiquement contre le moyeu menant Mb par une série de ressorts R' agissant sur des vis V fixées à l'armature A'. Lorsque l'inducteur l'est au repos (non alimenté), les ressorts R' font leur effet et plaquent l'armature contre de moyeu menant Mb, de sorte que les couronnes dentées M1 et A1 sont espacées l'une de l'autre : l'embrayage est alors en position débrayée. En revanche, lorsque l'inducteur l'est alimenté, l'armature A' est sollicité contre le moyeu mené Ma, de sorte que les couronnes dentées M1 et A1 sont engrenées l'une dans l'autre : l'embrayage est alors en position embrayée.

Le module de mesure H est monté sur l'inducteur l'avec son poussoir à aimants 42, 43 sollicité élastiquement contre l'armature A', tout comme dans le frein des figures 2 à 5b. Ce module de mesure H peut mesurer les grandeurs physiques suivantes de l'armature A' : déplacement de l'armature, sens de déplacement de l'armature, ampleur du déplacement de l'armature, variation de l'ampleur du déplacement de l'armature et vitesse de déplacement de l'armature.

La figure 10 est similaire à la figure 7 et montre un capteur de couple. Plus précisément, la figure 10 reprend la figure 7 et y ajoute un disque menant Db qui est relié au disque de friction Da par une tige de torsion T, qui peut être une tige d'acier de faible diamètre présentant des caractéristiques de torsion connues. Le disque menant Db est relié à un arbre moteur Sm et est équipé d'une couronne d'aimants D3, qui peut être identique à celle du disque de friction Da. Un capteur 3 est associé à chaque couronne d'aimants D3 de manière à former deux modules de mesure, dont les signaux de sortie sont corrélés pour déterminer le couple généré entre les deux disques Da et Db.

Quel que soit le mode de réalisation, il faut noter que le capteur de champ magnétique 3 est toujours orienté de la même façon par rapport au référentiel XYZ, c'est-à-dire avec sa direction de sensibilité B orientée selon l'axe Y, c'est-à-dire perpendiculairement ou orthogonalement au plan radial vertical Prv dans lequel il est disposé. Cette configuration permet une relative ou parfaite insensibilité aux perturbations générées par les lignes de champ issues du bobinage Ib.

## Revendications

1. Actionneur électromagnétique définissant un axe de symétrie Z et une infinité de plans radiaux disposés en éventail autour de l'axe de symétrie Z, l'actionneur électromagnétique comprenant au moins un inducteur (I) avec un bobinage (Ib), une armature mobile (A), un disque d'entrainement (D) et des moyens élastiques (R), l'armature (A) étant sollicitée, au repos, par les moyens élastiques (R) contre ou en éloignement du disque d'entrainement (D) et, lorsque le bobinage (Ib) est alimenté en courant, l'armature (A) est déplacée axialement vers l'inducteur (I) à l'encontre des moyens élastiques (R) en éloignement ou contre le disque d'entrainement (D), l'actionneur électromagnétique comprenant également au moins un module de mesure (H) comprenant un capteur de champ magnétique (3), tel qu'un capteur à effet Hall, disposé dans un plan radial Prv et définissant une direction de sensibilité B aux champs magnétiques, **caractérisé en ce que** le module de mesure (H) comprend au moins un aimant permanent (42, 43 ; D42, D43) qui se déplace par rapport au capteur de champ magnétique (3) de manière à générer un champ magnétique détectable par le capteur de champ magnétique (3), et **en ce que** la direction de sensibilité B du capteur de champ magnétique (3) est perpendiculaire au plan radial Prv dans lequel le capteur de champ magnétique (3) est positionné.

2. Actionneur électromagnétique selon la revendication 1, dans lequel le capteur de champ magnétique (3) présente une configuration plate définissant un plan de capteur Pc qui est parallèle, et de préférence, confondu, avec le plan radial Prv dans lequel le capteur de champ magnétique (3) est positionné, la direction de sensibilité B étant perpendiculaire au plan de capteur Pc.

3. Actionneur électromagnétique selon l'une quelconque des revendications précédentes, dans lequel le capteur de champ magnétique (3) est situé à proximité immédiate du bobinage, là-même où les lignes de champ magnétiques sont maximales.

4. Actionneur électromagnétique selon l'une quelconque des revendications précédentes, dans lequel deux aimants permanents (42, 43) sont solidarisés l'un par rapport à l'autre et alignés axialement de part et d'autre du capteur de champ magnétique (3), les aimants permanents (42, 43) étant sollicités élastiquement contre l'armature (A) et le capteur de champ magnétique (3) étant lié rigidement à l'inducteur (I).

5. Actionneur électromagnétique selon l'une quelconque des revendications précédentes, dans lequel deux aimants permanents (42, 43) sont solidarisés l'un par rapport à l'autre et alignés axialement de part et d'autre du capteur de champ magnétique (3), le capteur de champ magnétique (3) étant sollicité élastiquement contre l'armature (A) et les aimants permanents (42, 43) étant liés rigidement à l'inducteur (I).

6. Actionneur électromagnétique selon l'une quelconque des revendications précédentes, dans lequel les aimants permanents (42, 43) définissent pour l'un une orientation nord/sud et pour l'autre une orientation sud/nord qui sont parallèles entre elles, ainsi qu'avec la direction de sensibilité B.

7. Actionneur électromagnétique selon l'une quelconque des revendications précédentes, dans lequel le capteur de champ magnétique (3) est un capteur proportionnel.

8. Actionneur électromagnétique selon l'une quelconque des revendications 1 à 6, dans lequel le capteur de champ magnétique (3) est un capteur à seuil, dont la position relative entre les aimants permanents (42, 43) est ajustable mécaniquement.

9. Actionneur électromagnétique selon l'une quelconque des revendications précédentes, dans lequel le disque d'entrainement (D) est pourvu d'au moins une couronne d'aimants (D3) de polarisations alternées qui est solidaire en rotation du disque d'entrainement (D), de manière à pouvoir détecter un ou plusieurs des paramètres suivants :
- la position angulaire du disque d'entrainement (D),
- le sens de rotation du disque d'entrainement (D),
- la vitesse de rotation du disque d'entrainement (D), et
- la variation de vitesse de rotation du disque d'entrainement (D).

10. Actionneur électromagnétique selon la revendication 9, dans lequel la couronne d'aimants (D3) est positionnée sur la périphérie externe du disque d'entrainement (D).

11. Actionneur électromagnétique selon l'une quelconque des revendications précédentes, dans lequel le capteur de champ magnétique (3) est positionné à la fois au niveau de la couronne d'aimants (D3) du disque d'entrainement (D) et de manière adjacente à une face latérale de l'armature (A), de manière à pouvoir détecter un ou plusieurs des paramètres suivants :
- le déplacement de l'armature (A),
- le sens de déplacement de l'armature (A)
- l'ampleur du déplacement de l'armature (A),
- la variation de l'ampleur du déplacement de l'armature (A),
- la vitesse de déplacement de l'armature (A),
- la position angulaire du disque d'entrainement (D),
- le sens de rotation du disque d'entrainement (D),
- la vitesse de rotation du disque d'entrainement (D), et
- la variation de vitesse de rotation du disque d'entrainement (D).

12. Actionneur électromagnétique selon l'une quelconque des revendications précédentes, dans lequel plusieurs capteurs de champ magnétique (3) sont positionnés à proximité de plusieurs disques d'entrainement (D) pourvus chacun d'au moins une couronne d'aimants (D3) de polarisations alternées qui est solidaire en rotation de chaque disque d'entrainement (D), les disques d'entrainement étant élastiquement liés entre eux en torsion, de manière à pouvoir détecter un ou plusieurs des paramètres suivants :
- le couple de torsion entre les deux disques d'entrainement (D),
- le décalage angulaire entre les deux disques d'entrainement (D).

13. Actionneur électromagnétique selon l'une quelconque des revendications précédentes, comprenant en outre un carter de support (P) montée fixement sur l'inducteur (I) de manière à ce que le disque d'entrainement (D) soit positionné entre l'armature (A) et le carter de support (P), le module de mesure (H) étant monté fixement sur le carter de support (P).

14. Actionneur électromagnétique selon l'une quelconque des revendications précédentes, dans lequel l'armature (A) est pressée contre un disque d'entrainement (D) par au moins un ressort de compression (R) monté précontraint dans un boîtier (C) de l'unité d'actionnement pour freiner un arbre rotatif (S).

15. Actionneur électromagnétique selon l'une quelconque des revendications précédentes, dans lequel l'armature est munie de dentures et pressée contre un disque à dentures par au moins un ressort de compression monté précontraint dans un boîtier de l'unité d'actionnement pour embrayer en rotation un arbre rotatif.

## Patentansprüche

1. Elektromagnetischer Aktuator, der eine Symmetrieachse Z und eine unendliche Anzahl von Radialebenen definiert, die fächerförmig um die Symmetrieachse Z angeordnet sind, wobei der elektromagnetische Aktuator zumindest einen Induktor (I) mit einer Wicklung (Ib), einen beweglichen Anker (A), eine Antriebsscheibe (D) und elastische Mittel (R) enthält, wobei der Anker (A) im Ruhezustand durch die elastischen Mittel (R) zur Antriebsscheibe (D) hin oder von dieser weg beaufschlagt wird und wobei dann, wenn die Wicklung (Ib) mit Strom versorgt wird, der Anker (A) entgegen den elastischen Mitteln (R) von der Antriebsscheibe (D) weg oder zu dieser hin axial in Richtung zum Induktor (I) verschoben wird, wobei der elektromagnetische Aktuator ferner zumindest ein Messmodul (H) enthält, das einen Magnetfeldsensor (3), wie etwa einen Hall-Effekt-Sensor, enthält, der in einer radialen Ebene Prv angeordnet ist und eine Empfindlichkeitsrichtung B für Magnetfelder definiert,
**dadurch gekennzeichnet, dass**
das Messmodul (H) zumindest einen Permanentmagneten (42, 43; D42, D43) enthält, der sich relativ zum Magnetfeldsensor (3) bewegt, um ein vom Magnetfeldsensor (3) erfassbares Magnetfeld zu erzeugen, und
dass die Empfindlichkeitsrichtung B des Magnetfeldsensors (3) senkrecht zu der Radialebene Prv verläuft, in der der Magnetfeldsensor (3) positioniert ist.

2. Elektromagnetischer Aktuator nach Anspruch 1, wobei der Magnetfeldsensor (3) eine flache Konfiguration aufweist, die eine Sensorebene Pc definiert, die parallel zu und vorzugsweise deckungsgleich mit der Radialebene Prv verläuft, in der der Magnetfeldsensor (3) positioniert ist, wobei die Empfindlichkeitsrichtung B senkrecht zu der Sensorebene Pc verläuft.

3. Elektromagnetischer Aktuator nach einem der vorhergehenden Ansprüche, wobei der Magnetfeldsensor (3) in unmittelbarer Nähe der Wicklung angeordnet ist, genau dort, wo die Magnetfeldlinien maximal sind.

4. Elektromagnetischer Aktuator nach einem der vorhergehenden Ansprüche, wobei zwei Permanentmagnete (42, 43) fest miteinander verbunden und axial zu beiden Seiten des Magnetfeldsensors (3) ausgerichtet sind, wobei die Permanentmagnete (42, 43) elastisch gegen den Anker (A) beaufschlagt sind und der Magnetfeldsensor (3) starr mit dem Induktor (I) verbunden ist.

5. Elektromagnetischer Aktuator nach einem der vorhergehenden Ansprüche, wobei zwei Permanentmagnete (42, 43) fest miteinander verbunden und axial zu beiden Seiten des Magnetfeldsensors (3) ausgerichtet sind, wobei der Magnetfeldsensor (3) elastisch gegen den Anker (A) beaufschlagt ist und die Permanentmagnete (42, 43) starr mit dem Induktor (I) verbunden sind.

6. Elektromagnetischer Aktuator nach einem der vorhergehenden Ansprüche, wobei bei den Permanentmagneten (42, 43) der eine eine Nord/Süd-Ausrichtung und der andere eine Süd/Nord-Ausrichtung definiert, die zueinander und zur Empfindlichkeitsrichtung B parallel verlaufen.

7. Elektromagnetischer Aktuator nach einem der vorhergehenden Ansprüche, wobei der Magnetfeldsensor (3) ein Proportionalsensor ist.

8. Elektromagnetischer Aktuator nach einem der Ansprüche 1 bis 6, wobei der Magnetfeldsensor (3) ein Schwellensensor ist, dessen relative Position zwischen den Permanentmagneten (42, 43) mechanisch einstellbar ist.

9. Elektromagnetischer Aktuator nach einem der vorhergehenden Ansprüche, wobei die Antriebsscheibe (D) mit zumindest einem Ring aus Magneten (D3) mit abwechselnder Polarisation versehen ist, der drehfest mit der Antriebsscheibe (D) verbunden ist, um einen oder mehrere der folgenden Parameter erfassen zu können:
- die Winkellage der Antriebsscheibe (D),
- die Drehrichtung der Antriebsscheibe (D),
- die Drehzahl der Antriebsscheibe (D), und
- die Drehzahländerung der Antriebsscheibe (D).

10. Elektromagnetischer Aktuator nach Anspruch 9, wobei der Ring aus Magneten (D3) am Außenumfang der Antriebsscheibe (D) angeordnet ist.

11. Elektromagnetischer Aktuator nach einem der vorhergehenden Ansprüche, wobei der Magnetfeldsensor (3) sowohl am Magnetring (D3) der Antriebsscheibe (D) als auch benachbart zu einer Seitenfläche des Ankers (A) angeordnet ist, um einen oder mehrere der folgenden Parameter erfassen zu können:
- die Bewegung des Ankers (A),
- die Bewegungsrichtung des Ankers (A)
- das Ausmaß der Bewegung des Ankers (A),
- die Ausmaßänderung der Bewegung des Ankers (A),
- die Bewegungsgeschwindigkeit des Ankers (A),
- die Winkellage der Antriebsscheibe (D),
- die Drehrichtung der Antriebsscheibe (D),
- die Drehzahl der Antriebsscheibe (D), und
- die Drehzahländerung der Antriebsscheibe (D).

12. Elektromagnetischer Aktuator nach einem der vorhergehenden Ansprüche, wobei mehrere Magnetfeldsensoren (3) in der Nähe mehrerer Antriebsscheiben (D) angeordnet sind, die jeweils mit zumindest einem Ring aus Magneten (D3) mit abwechselnder Polarisation versehen sind, der drehfest mit jeder Antriebsscheibe (D) verbunden ist, wobei die Antriebsscheiben elastisch torsionsfest miteinander verbunden sind, um einen oder mehrere der folgenden Parameter erfassen zu können:
- das Torsionsmoment zwischen den beiden Antriebsscheiben (D),
- den Winkelversatz zwischen den beiden Antriebsscheiben (D).

13. Elektromagnetischer Aktuator nach einem der vorhergehenden Ansprüche, ferner enthaltend ein Traggehäuse (P), das fest an dem Induktor (I) montiert ist, so dass die Antriebsscheibe (D) zwischen dem Anker (A) und dem Traggehäuse (P) positioniert ist, wobei das Messmodul (H) fest an dem Traggehäuse (P) montiert ist.

14. Elektromagnetischer Aktuator nach einem der vorhergehenden Ansprüche, wobei der Anker (A) über zumindest eine in einem Gehäuse (C) der Betätigungseinheit vorgespannt gelagerte Druckfeder (R) gegen eine Antriebsscheibe (D) gedrückt wird, um eine Drehwelle (S) abzubremsen.

15. Elektromagnetischer Aktuator nach einem der vorhergehenden Ansprüche, wobei der Anker mit Verzahnungen versehen ist und über zumindest eine in einem Gehäuse der Betätigungseinheit vorgespannte Druckfeder gegen eine Zahnscheibe gedrückt wird, um eine rotierende Welle nach Art einer Kupplung in Dreheingriff zu bringen.

## Claims

1. An electromagnetic actuator defining an axis of symmetry Z and an infinite number of radial planes disposed in a fan arrangement around the axis of symmetry Z, the electromagnetic actuator comprising at least one inductor (I) with a winding (lb), a movable armature (A), a driving disc (D) and elastic means (R), the armature (A) being biased, at rest, by the elastic means (R) against or away from the driving disc (D) and, when the coil (lb) is supplied with current, the armature (A) is moved axially towards the inductor (I) against the elastic means (R) away from or against the driving disc (D), the electromagnetic actuator also comprising at least one measuring module (H) comprising a magnetic field sensor (3), such as a Hall effect sensor, disposed in a radial plan Prv and defining a direction of sensitivity B to magnetic fields, **characterized in that** the measuring module (H) comprises at least one permanent magnet (42, 43; D42, D43) which moves relative to the magnetic field sensor (3) so as to generate a magnetic field detectable by the magnetic field sensor (3), and **in that** the direction of sensitivity B of the magnetic field sensor (3) is perpendicular to the radial plane Prv in which the magnetic field sensor (3) is positioned.

2. An electromagnetic actuator according to claim 1, in which the magnetic field sensor (3) has a flat configuration defining a sensor plane Pc which is parallel, and preferably coincides, with the radial plane Prv in which the magnetic field sensor (3) is positioned, the direction of sensitivity B being perpendicular to the plane of the sensor Pc.

3. An electromagnetic actuator according to any one of the preceding claims, in which the magnetic field sensor (3) is located in immediate proximity to the coil, where the lines of magnetic field are maximum.

4. An electromagnetic actuator according to any one of the preceding claims, in which two permanent magnets (42, 43) are joined relative to each other and axially aligned on opposite sides of the magnetic field sensor (3), the permanent magnets (42, 43) being elastically biased against the armature (A) and the magnetic field sensor (3) being rigidly connected to the inductor (I).

5. An electromagnetic actuator according to any one of the preceding claims, in which two permanent magnets (42, 43) are joined relative to each other and axially aligned on opposite sides of the magnetic field sensor (3), the magnetic field sensor (3) being elastically biased against the armature (A) and the permanent magnets (42, 43) being rigidly connected to the inductor (I).

6. An electromagnetic actuator according to any one of the preceding claims, in which one of the permanent magnets (42, 43) defines a north/south orientation and the other a south/north orientation which are parallel to each other, as well as with the direction of sensitivity B.

7. An electromagnetic actuator according to any one of the preceding claims, in which the magnetic field sensor (3) is a proportional sensor.

8. An electromagnetic actuator according to any one of claims 1 to 6, in which the magnetic field sensor (3) is a threshold sensor, of which the relative position between the permanent magnets (42, 43) is mechanically adjustable.

9. An electromagnetic actuator according to any one of the preceding claims, in which the driving disc (D) is provided with at least one crown of magnets (D3) of alternating polarizations which is rotationally coupled to the driving disc (D), so as to be able to detect one or more of the following parameters:
- the angular position of the driving disc (D),
- the direction of rotation of the driving disc (D),
- the speed of rotation of the driving disc (D), and
- the variation in speed of rotation of the driving disc (D),

10. An electromagnetic actuator according to claim 9, in which the crown of magnets (D3) is positioned on the outer periphery of the driving disc (D).

11. An electromagnetic actuator according to any one of the preceding claims, in which the magnetic field sensor (3) is positioned both at the location of the crown of magnets (D3) of the driving disc (D) and adjacent to a lateral face of the armature (A), so as to be able to detect one or more of the following parameters:
- the movement of the armature (A),
- the direction of movement of the armature (A),
- the amplitude of the movement of the armature (A),
- the variation in the amplitude of the movement of the armature (A),
- the speed of movement of the armature (A),
- the angular position of the driving disc (D),
- the direction of rotation of the driving disc (D),
- the speed of rotation of the driving disc (D), and
- the variation in speed of rotation of the driving disc (D),

12. An electromagnetic actuator according to any one of the preceding claims, in which several magnetic field sensors (3) are positioned in the vicinity of several driving discs (D) each provided with at least one crown of magnets (D3) with alternating polarizations which is rotationally coupled with each driving disc (D), the driving discs being elastically linked together torsionally, so as to be able to detect one or more of the following parameters:
- the torsional couple between the two driving discs (D),
- the angular offset between the two driving discs (D).

13. An electromagnetic actuator according to any one of the preceding claims, further comprising a support casing (P) fixedly mounted on the inductor (I) such that the driving disc (D) is positioned between the armature (A) and the support casing (P), the measuring module (H) being fixedly mounted on the support casing (P).

14. An electromagnetic actuator according to any one of the preceding claims, in which the armature (A) is pressed against a driving disc (D) by at least one compression spring (R) mounted prestressed in a casing (C) of the actuating unit to brake a rotary shaft (S).

15. An electromagnetic actuator according to any one of the preceding claims, in which the armature is provided with toothed formations and pressed against a disk with toothed formations by at least one compression spring mounted prestressed in a casing of the actuating unit to rotationally engage a rotary shaft in the manner of a clutch.
